# EUROPÄISCHE PATENTSCHRIFT

(11) **EP 4 348 193 B1**
(45) Veröffentlichungstag und Bekanntmachung des Hinweises auf die Patenterteilung: **03.09.2025**
(21) Anmeldenummer: 22721267.7
(22) Anmeldetag: 07.04.2022
(51) Int. Cl.: G01G 23/00, G01G 21/30

(54) **PRÄZISIONS-PENDELLASTSTÜTZE**
PRECISION ROCKER PIN FOR A LOAD CELL
AXE OSCILLANT DE PRÉCISION POUR UNE CELLULE DE CHARGE

(30) Priorität: 26.05.2021 DE 102021002729
(43) Veröffentlichungstag der Anmeldung: 10.04.2024
(73) Patentinhaber: Hottinger Brüel & Kjaer GmbH, 64293 Darmstadt (DE)
(72) Erfinder: SCHLACHTER, Werner, 63380 Roßdorf (DE); HOST, Ursula, 64347 Griesheim (DE); NIEDBALLA, Daniel, 63225 Langen (DE)
(74) Vertreter: Müller, Thomas
(86) Internationale Anmeldenummer: PCT/DE2022/000039
(87) Internationale Veröffentlichungsnummer: WO 2022/247976

(56) Entgegenhaltungen:
- EP-B1- 2 376 878
- FR-A3- 2 709 181

## Beschreibung

Die Erfindung betrifft eine sogenannten Pendellaststütze, die insbesondere in der industriellen Wägetechnik in Plattform- oder Behälterwaagen eingesetzt werden. Aus dem Stand der Technik sind verschiedene Konstruktionsformen bekannt, wie z. B. in den Dokumenten FR2709181A3, DE 102016118046 B4, EP 0 315 846 B1, US 4 815 547 oder DE 196 25 821 C1 beschrieben.

Pendellaststützen haben die Funktion, Querkräfte von Wägezellen abzuschirmen, sodass ausschließlich die Kräfte auf die Wägezellen einwirken, die durch die Masse des zu verwägenden Materials bewirkt werden.

In der industriellen Wägetechnik gibt es verschiedene Anforderungen, wie z. B. besondere Anforderungen an hygienische Bedingungen in der Lebensmittelindustrie. Hier müssen die Produktionsanlagen, in denen die Wagen integriert sind, häufig gereinigt und desinfiziert werden. Das wird z. B. mit Dampf oder heißem Wasser durchgeführt, der unter Druck auf die Anlagenteile gestrahlt wird. Der Dampf oder das Wasser ist auch mit Desinfektionsmitteln versetzt. Es ist erforderlich, dass alle Bauteile der Produktionsanlage so konstruiert sind, dass sie sich gut reinigen lassen. Es dürfen also keine Spalte oder Hohlräume vorliegen, die beim Reinigen nicht erreichbar sind, denn darin könnten sich Bakterienkulturen entwickeln, was in einer Lebensmittelindustrie ausgeschlossen werden muss. Demzufolge muss auch eine Pendellaststütze sicher gereinigt werden können. Herkömmlich konstruierte Pendellaststützen erfüllen diese Voraussetzungen nicht.

In dem Dokument DE 102016118046 B4 ist eine Pendellaststützen beschrieben, die nach Aussagen der Erfinder für den Einsatz in der Lebensmittelindustrie geeignet ist.

In der pharmazeutischen Industrie sind jedoch die Anforderungen an Keimfreiheit z. T. noch höher. Weiterhin werden in der Regel auch höhere Anforderungen an die Dosiergenauigkeit gestellt, d.h. die jeweiligen pharmazeutischen Komponenten müssen z. T. mit höherer Genauigkeit als in der Lebensmittelindustrie verwogen oder dosiert werden.

Pendellaststützen nutzen als Lagerbauteile punktförmige und/oder linienförmige Auflagen, um einen möglichst kleinen Reibungswiderstand zu erhalten. Es ist bekannt, dass an den Berührungsstellen das Phänomen der sogenannten Hertzschen Pressung entsteht, d. h. eine Abplattung an den sich berührenden Bauteilen. Die Größe dieser Abplattung ist u. a. von der einwirkenden Kraft abhängig, mit der die Bauteile aneinandergepresst werden.

Aus dem Stand der Wägetechnik ist bekannt, wie die Berührungsstellen solcher Lagerbauteile zu konstruieren sind und welche Materiealien dazu vorzugsweise geeignet sind.

In der mechanischen Präzisionswägetechnik sind Bauteile erforderlich, die eine besonders geringe linien- ring- oder punktförmige Berührungsfläche aufweisen. Dadurch wird jedoch die Flächenpressung sehr hoch und die sich berührenden Materialflächen werden stark belastet und nutzten sich ab. Bei mechanischen Präzisionswaagen ist es sogar vorgesehen, dass die sogenannte Pfanne und die sich darin bewegende Schneide austauschbar sind. Dieser konstruktive Aufwand kann bei einer im industriellen Waagenbau verwendeten Pendelstütze nicht betrieben werden. Es muss also damit gerechnet werden, dass sich die Beweglichkeit einer Pendellaststütze im Laufe der Zeit verringert, insbesondere wenn Feuchtigkeit und ggf. aggressive Reinigungs- und Desinfektionsmitten an die Lagerflächen gelangen. Weiterhin besteht das Problem, dass ein Stillstand bei manchen Produktionsanlagen unerwünscht ist und daher die beweglichen Bauelemente der Pendellaststütze eine möglichst lange Lebensdauer aufweisen sollen.

Es ist demzufolge die Aufgabe der Erfindung, eine Pendellaststütze mit einer langen Lebensdauer bereitzustellen, die über die gesamte Lebensdauer ihre Beweglichkeit beibehält, auch bei hoher Feuchtigkeit und unter Einfluss von aggressiven Reinigungs- und Desinfektionsmitteln.

Die Aufgabe wird mit einer Pendellaststütze nach Anspruch 1 gelöst.

Die Pendellaststütze weist nachfolgende Merkmale auf: Eine Basisplatte, vorzugsweise aus rostfreiem Stahl, in der konzentrisch eine zylindrische Ausnehmung mit einer planen Bodenfläche vorgesehen ist, einen Pendelbolzen mit einer ballenförmigen Unterseite und einer kugelförmigen Oberseite und ein Pendelstück mit einer zylindrischen Ausnehmung, deren Durchmesser größer ist als der Durchmesser des oberen Abschnitts des Pendelbolzens. In der Bodenfläche dieser zylindrischen Ausnehmung ist zentrisch eine Einsenkung vorgesehen. Die ballenförmige Unterseite des Pendelbolzens liegt auf der planen Bodenfläche der Ausnehmung auf. Das Pendelstück liegt mit seiner zentrischen Einsenkung auf der kugelförmigen Oberseite des Pendelbolzens auf. Eine glockenförmige Abdeckung aus einem elastischen Kunststoff ist an ihrem oberen Randabschnitt hermetisch dicht mit dem Pendelstück und an ihrem unteren Randabschnitt hermetisch dicht mit der Basisplatte verbunden.

Die Glockenform der Abdeckung hat verschiedene Vorteile: Je nach Erfordernis können Materialien mit unterschiedlicher Elastizität und Temperaturbeständigkeit und anderen gewünschten Eigenschaften eingesetzt werden. Unter der Abdeckung ist ein freier Raum ausgebildet, der Luft oder ein spezielles Gas enthält. Das Gas- oder Luftvolumen ist größer als die Summe der Volumina der Abschnitte des Pendelbolzens und des Pendelstücks, die von der Luft oder vom Gas umschlossen sind. Das bewirkt, dass das eingeschlossene Gas gut zirkulieren kann und die darin enthaltene Feuchtigkeit an allen Stellen konstant bleibt, so dass z. B. ein Kondensieren der Feuchtigkeit durch Temperaturwechsel an speziellen Stellen weitgehend vermieden wird bzw. kondensierte Feuchtigkeit schnell wieder verdunstet. Das ist von Vorteil, da dadurch z.B. die eingesetzten Schmierstoffe ihre Schmierfähigkeit länger beibehalten.

Nach Anspruch 2 besteht die Abdeckung aus einem antibakteriellen Kunststoff, was besonders beim Einsatz in der Lebensmittelindustrie und in der pharmazeutischen Industrie Vorteile hat.

Nach Anspruch 3, als Alternative zum Gegenstand nach Anspruch 2, ist nur die Außenoberfläche der Abdeckung mit einer antibakteriellen Beschichtung versehen.

Nach Anspruch 4 besteht die Abdeckung aus wenigstens zwei Materialschichten. Zwei oder mehrere Materialschichten erhöhen die Flexibilität der Abdeckung. Die Abdeckung wird biegeweicher und verfälscht somit nicht die Kräfte, die sich aus den zu wiegenden Massen ergeben. Die äußere Schicht der Abdeckung kann aus einem Werkstoff mit antibakterieller Wirkung bestehen.

Nach Anspruch 5 ist innerhalb der Luft- oder Gasfüllung ein hygroskopischer Stoff eingelagert, der die Feuchtigkeit des Gases gering hält. Dadurch wird eine lange Wirksamkeit der Schmierstoffe erreicht.

Nach Anspruch 6 ist die Gasfüllung ein Inertgas. Dadurch wird ebenfalls eine lange Wirksamkeit der Schmierstoffe erreicht.

Die Erfindung wird nachfolgend anhand von schematischen Zeichnungen näher erläutert:
- Fig. 1: zeigt eine Pendellaststütze in einer perspektivischen Ansicht,
- Fig. 2: zeigt die Pendellaststütze im Querschnitt,
- Fig. 3: zeigt eine Pendellaststütze im Querschnitt in einer zweiten Ausführungsform,
- Fig. 4: zeigt eine Pendellaststütze im Querschnitt in einer dritten Ausführungsform,
- Fig. 5: zeigt eine Pendellaststütze im Querschnitt in einer vierten Ausführungsform und
- Fig. 6: zeigt die eingebaute Pendellaststütze bei einer Reinigung und Desinfektion.

### Bezugszeichenliste

1 Basisplatte
2 zylindrische Ausnehmung in der Basisplatte
3 plane Bodenfläche der zylindrischen Ausnehmung
4 Pendelbolzen
5 ballenförmige Unterseite des Pendelbolzens
6 kugelförmige Oberseite des Pendelbolzens
7 Pendelstück
8 zylindrische Ausnehmung im Pendelstück
9 kegelförmige Einsenkung im Pendelstück
10 glockenförmige Abdeckung
11 Luft- oder Gasfüllung
12 antibakterielle Beschichtung
13 hygroskopischer Stoff
14 Reinigungsvorrichtung

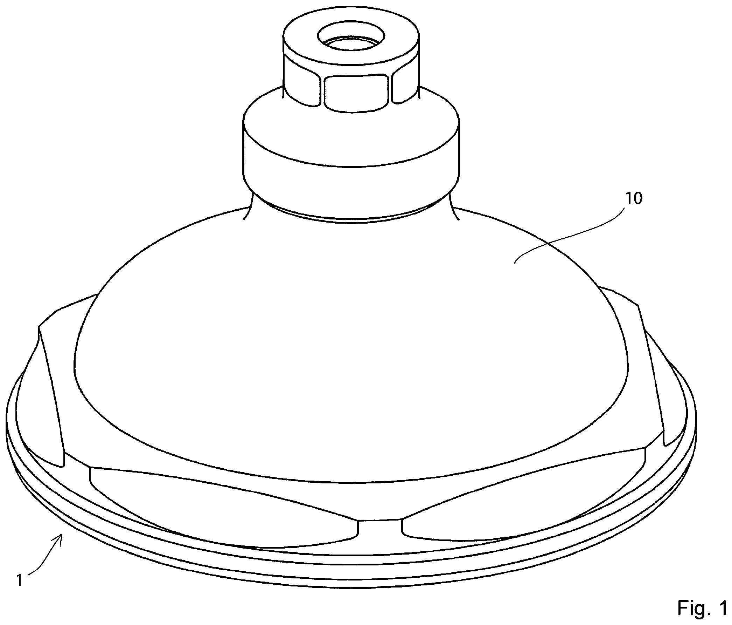

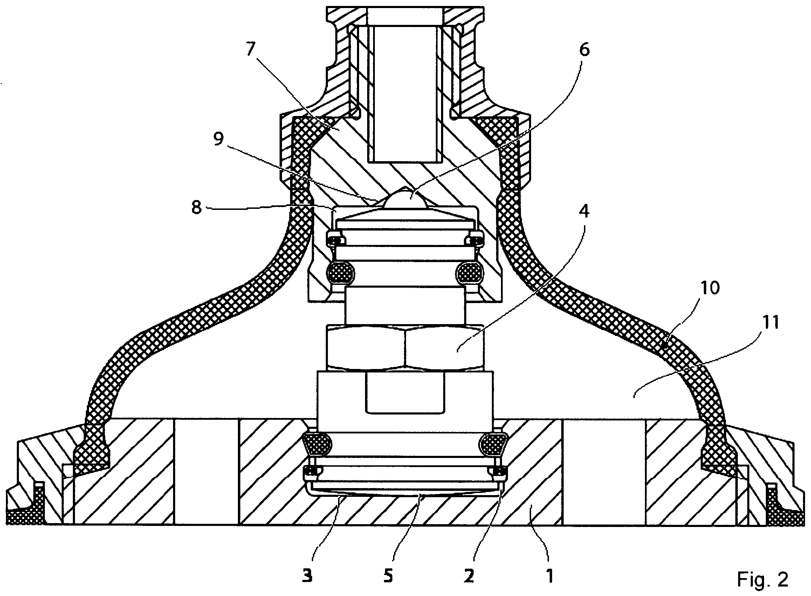

Die Fig. 1 zeigt eine Pendellaststütze in einer perspektivischen Ansicht. Die Fig. 2 zeigt die Pendellaststütze im Querschnitt. Die Pendellaststütze weist nachfolgende Merkmale auf: Eine Basisplatte 1 aus rostfreiem Stahl, auf deren Oberseite konzentrisch eine zylindrischen Ausnehmung 2 mit einer planen Bodenfläche 3 vorgesehen ist, einen Pendelbolzen 4 mit einer ballenförmigen Unterseite 5 und einer kugelförmigen Oberseite 6, ein Pendelstück 7 mit einer zylindrischen Ausnehmung 8, deren Durchmesser größer ist als der Durchmesser des oberen Abschnitts des Pendelbolzens 4, und einer zentrisch eingebrachten kegelförmigen Einsenkung 9. Der untere Abschnitt des Pendelbolzens 4 steckt in der zylindrischen Ausnehmung 2 der Basisplatte 1 und das Pendelstück 7 liegt auf der kugelförmigen Oberseite des Pendelbolzens 4 auf.

Eine glockenförmige Abdeckung 10 aus einem elastischen Kunststoff ist an ihrem oberen Randabschnitt hermetisch dicht mit dem Pendelstück 7 und an ihrem unteren Randabschnitt hermetisch dicht mit der Basisplatte 1 verbunden. Vorzugsweise ist die Verbindung am oberen Randabschnitt eine Klebverbindung, die Verbindung kann im Bedarfsfall aber auch eine Klemmung sein. Die Verbindung mit der Basisplatte ist vorzugsweise lösbar, z.B. eine Klemmung durch Verschraubung. Der Raum unter der Abdeckung 10 ist mit Luft oder Gas 11 gefüllt.

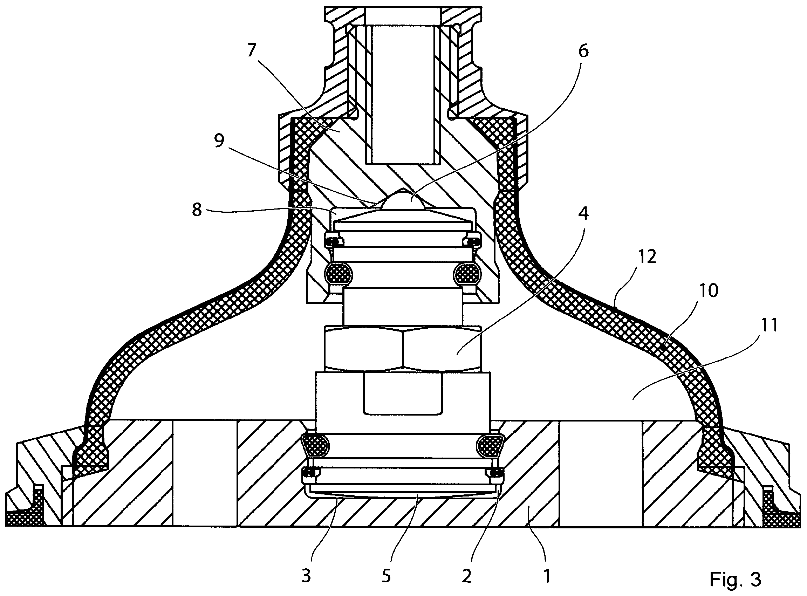

Bei der Pendellaststütze nach Fig. 3 weist nur die Außenoberfläche der Abdeckung 10 eine antibakterielle Beschichtung 12 auf. Das hat den Vorteil, dass die Abdeckung aus einem besonders flexiblen und gasdichten Kunststoff gefertigt sein kann und trotzdem eine antibakterielle Wirkung aufweist.

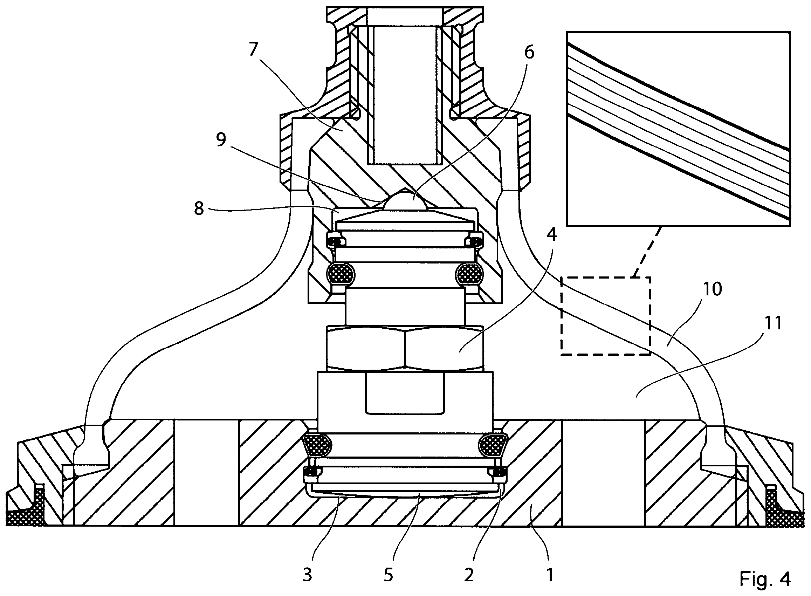

Bei der Pendellaststütze nach Figur 4 besteht die Abdeckung 10 aus 6 Materialschichten. Diese Anordnung hat verschiedene Vorteile. So kann die äußere Materialschicht dünn, aber widerstandsfähig gegenüber aggressiven Reinigungsmitteln gewählt sein. Die inneren Schichten sind aus besonders weichelastischem Material. Die einzelnen Schichten sind nicht miteinander verbunden.

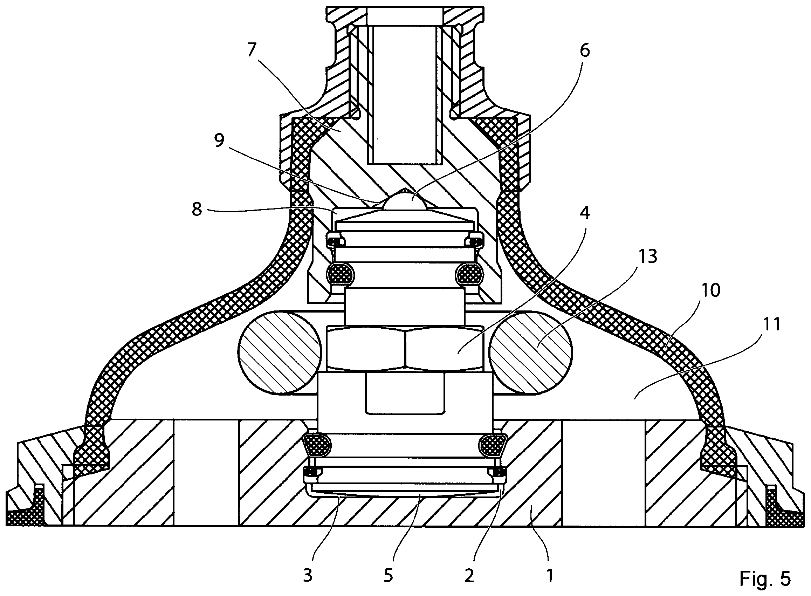

Bei der Pendellaststütze nach Figur 5 ist in der Luft- oder Gasfüllung 11 ein hygroskopischer Stoff 13 eingelagert. Dadurch wird eine lange Wirksamkeit der Schmierstoffe erreicht.

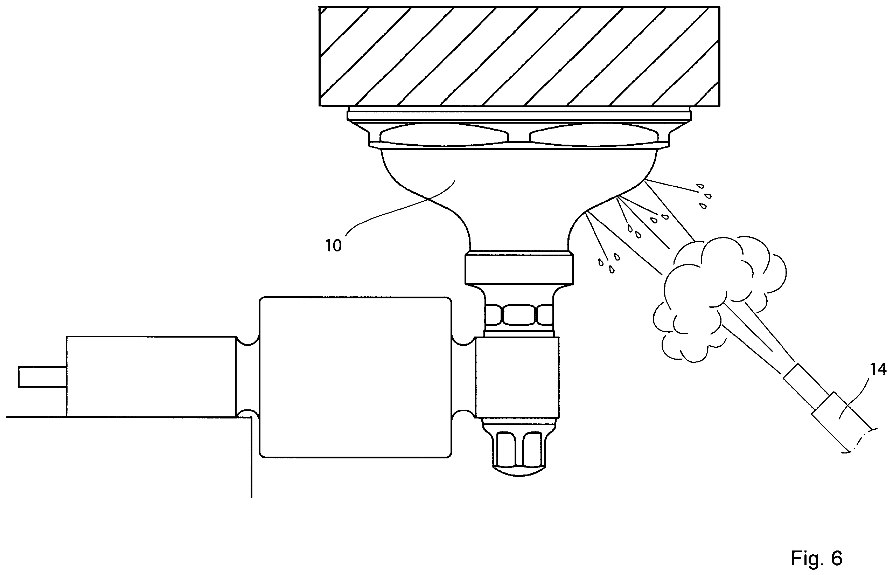

Die Figur 6 zeigt eine Einbausituation, in der die in einer Anlage eingebaute Pendellaststütze mittels eines Dampfstrahlers 14 gereinigt wird.

## Patentansprüche

1. Pendellaststütze, die nachfolgende Merkmale aufweist:
- eine Basisplatte (1) in der konzentrisch eine zylindrische Ausnehmung (2) mit einer planen Bodenfläche (3) eingebracht ist,
- einen Pendelbolzen (4) mit einer ballenförmigen Unterseite (5) und einer kugelförmigen Oberseite (6),
- ein Pendelstück (7) mit einer zylindrischen Ausnehmung (8), deren Durchmesser größer ist als der Durchmesser des oberen Abschnitts des Pendelbolzens (4), und einer zentrisch eingebrachten Einsenkung (9), wobei der Pendelbolzen (4) über seine ballenförmige Unterseite (5) schwenkbar in der zylindrischen Ausnehmung (2) gelagert ist und über seine kugelförmige Oberseite (6) das Pendelstück (7) schwenkbar stützt,
- eine glockenförmige Abdeckung (10) aus elastischem Kunststoff, die an ihrem oberen Randabschnitt hermetisch dicht mit dem Pendelstück (7) verbunden ist und die an ihrem unteren Randabschnitt hermetisch dicht mit der Basisplatte (1) verbunden ist, so dass ein Raum ausgebildet ist, der eine Luft- oder Gasfüllung (11) enthält, wobei die Bedingung eingehalten wird, dass das Gas- oder Luftvolumen (11) größer als die Summe der Volumina der Abschnitte des Pendelbolzens und des Pendelstücks ist, die von der Luft oder vom Gas umschlossen sind .

2. Pendellaststütze nach Anspruch 1, wobei die Abdeckung (10) aus einem antibakteriellen Kunststoff besteht.

3. Pendellaststütze nach Anspruch 1, wobei die Abdeckung (10) eine antibakterielle Beschichtung (12) aufweist.

4. Pendellaststütze nach Anspruch 1, wobei die Abdeckung (10) aus wenigsten zwei Kunststoffschichten besteht.

5. Pendellaststütze nach Anspruch 1, wobei in der Luft- oder Gasfüllung (11) ein hygroskopischer Stoff (13) eingelagert ist.

6. Pendellaststütze nach Anspruch 1, wobei die Gasfüllung (11) ein inertes Gas ist.

## Claims

1. Pendulum load support, comprising the following features:
- a base plate (1), in which a cylindrical recess (2) with a flat bottom surface (3) is concentrically formed,
- a pendulum pin (4) with a ball-shaped bottom side (5) and a spherical upper side (6),
- a pendulum piece (7) with a cylindrical recess (8) whose diameter is greater than the diameter of the upper section of the pendulum pin (4), and a centrally provided cavity (9), wherein the pendulum pin (4) is pivotably mounted in the cylindrical recess (2) via its ball-shaped bottom side (5) and pivotably supports the pendulum piece (7) via its spherical upper side (6),
- a bell-shaped cover (10) made of elastic plastic, which is connected to the pendulum piece (7) at its upper edge section in a hermetically sealed manner and which is connected to the base plate (1) at its lower edge section in a hermetically sealed manner, so that a space is formed which contains an air or gas filling (11), whereby the following condition is fulfilled:
the volume of gas or air (11) is greater than the sum of the volumes of the sections of the pendulum pin and the pendulum piece that are enclosed by the air or gas.

2. Pendulum load support according to claim 1, wherein the cover (10) is made of an antibacterial plastic.

3. Pendulum load support according to claim 1, wherein the cover (10) comprises an antibacterial coating (12).

4. Pendulum load support according to claim 1, wherein the cover (10) consists of at least two plastic layers.

5. Pendulum load support according to claim 1, wherein a hygroscopic substance (13) is stored in the air or gas filling (11).

6. Pendulum load support according to claim 1, wherein the gas filling (11) is an inert gas..

## Revendications

1. Support de charge pendulaire, qui présente les caractéristiques suivantes :
- une plaque de base (1) dans laquelle un évidement cylindrique (2) avec une surface de fond plane (3) est pratiqué de manière concentrique,
- un boulon pendulaire (4) avec un côté inférieur en forme de boule (5) et un côté supérieur sphérique (6),
- une pièce pendulaire (7) avec un évidement cylindrique (8) dont le diamètre est supérieur au diamètre de la section supérieure du boulon pendulaire (4), et un renfoncement (9) pratiqué centralement, dans lequel le boulon pendulaire (4) est monté de manière pivotante dans l'évidement cylindrique (2) par son côté inférieur en forme de boule (5) et supporte de manière pivotante la pièce pendulaire (7) par son côté supérieur sphérique (6),
- un couvercle en forme de cloche (10) en matière plastique élastique, qui est relié de manière hermétique à la pièce pendulaire (7) au niveau de sa section de bord supérieure et qui est relié de manière hermétique à la plaque de base (1) au niveau de sa section de bord inférieure, de sorte qu'un espace, qui contient un remplissage d'air ou de gaz (11), est formé, dans lequel une condition est respectée stipulant que le volume d'air ou de gaz (11) est supérieur à la somme des volumes des sections du boulon pendulaire et de la pièce pendulaire qui sont entourées par l'air ou le gaz.

2. Support de charge pendulaire selon la revendication 1, dans lequel le couvercle (10) est constitué d'une matière plastique antibactérienne.

3. Support de charge pendulaire selon la revendication 1, dans lequel le couvercle (10) présente un revêtement antibactérien (12).

4. Support de charge pendulaire selon la revendication 1, dans lequel le revêtement (10) est constitué d'au moins deux couches de matière plastique.

5. Support de charge pendulaire selon la revendication 1, dans lequel une substance hygroscopique (13) est stockée dans le remplissage d'air ou de gaz (11).

6. Support de charge pendulaire selon la revendication 1, dans lequel le remplissage de gaz (11) est un gaz inerte.
